Europäisches Patentamt

European Patent Office

Office européen des brevets

(11) Veröffentlichungsnummer: **0 476 683 A1**

## (12) EUROPÄISCHE PATENTANMELDUNG

(21) Anmeldenummer: **91116018.2**

(51) Int. Cl.5: **A61C 5/06**

(22) Anmeldetag: **20.09.91**

(30) Priorität: **20.09.90 DE 9013328 U**

(43) Veröffentlichungstag der Anmeldung:
**25.03.92 Patentblatt 92/13**

(84) Benannte Vertragsstaaten:
**CH DE ES FR GB IT LI SE**

(71) Anmelder: **Ihde, Stefan, Dr.**
**Lindenstrasse 68**
**CH-8738 Uetliburg(CH)**

(72) Erfinder: **Ihde, Stefan, Dr.**
**Lindenstrasse 68**
**CH-8738 Uetliburg(CH)**

(74) Vertreter: **Eisenführ, Speiser & Strasse**
**Martinistrasse 24**
**W-2800 Bremen 1(DE)**

(54) **Mischkapsel aus Glas für Dental-Amalgam.**

(57) Eine zur Herstellung einer portionierten Menge Dental-Amalgam bestehende Mischkapsel hat einen Mischraumkörper (1), in dem sowohl das Quecksilber (6) in einem Folienbehälter (7) als auch die übrigen Mischungsbestandteile (8) untergebracht sind. Der Mischraumkörper (1) besteht aus Glas und besitzt entweder eine in Längsrichtung mittige, über den Umfang des rotationssymmetrischen Mischraumkörpers (1) umlaufende Einschnürung (5) oder ist in einer entsprechenden Ebene geteilt, wobei die beiden Teile lösbar miteinander verbunden sind. Im letzteren Falle kann die Verbindung durch Verkleben der einander zugewandten Stirnflächen der Teilungsfuge oder eine die Teilungsfuge (22) außen übergreifende Raupe (28) aus gummielastischem Material erfolgen.

Während des Mischvorganges kann der Mischraumkörper (1) aus Glas in einer Kunststoffummantelung (10) angeordnet werden, die auch Teil der Mischvorrichtung sein kann.

Fig.1

Die Erfindung betrifft eine Mischkapsel für Dental-Amalgam mit einem länglichen, zur Längsachse rotationssymmetrischen Mischraumkörper aus Glas, in dessen Mischraum einerseits Quecksilber innerhalb eines Folienbehälters sowie andererseits die übrigen Mischungsbestandteile untergebracht sind.

Die die verschiedenen Mischungsbestandteile einer bestimmten Menge von Dental-Amalgam enthaltenden Mischkapseln haben sich als Arbeitserleichterung für den applizierenden Zahnarzt eingeführt. Durch Vibrationsbehandlung der Kapsel läßt sich der Folienbehälter öffnen und das austretende Quecksilber mit den pulverförmig vorliegenden anderen Mischungsbestandteilen zu Amalgam von gewünschter Konsistenz vermischen. Die Mischkapsel wird alsdann geöffnet und das Amalgam entnommen.

Im allgemeinen bestehen derartige Mischkapseln aus Kunststoff, weil diese besonders kostengünstig herstellbar und vorteilhaft handhabbar sind. Es hat sich jedoch gezeigt, daß ein Problem in der Entsorgung solcher Mischkapseln besteht. Denn die Kapseln sind naturgemäß mit Quecksilber kontaminiert. Da eine Trennung des Kapsel-Kunststoffes von den Verunreinigungen nicht möglich ist, müssen gebrauchte Kapseln in aufwendiger Weise als Sondermüll behandelt werden.

Stellt man hingegen den Mischraumkörper aus Glas her, dann gibt es dieses Problem nicht: Wegen der hohen thermischen Widerstandsfähigkeit von Glas lassen sich mit Quecksilber kontaminierte Glas-Mischraumkörper so hoch erhitzen, daß das Quecksilber verdampft. Während letzteres in geeigneter Weise gesammelt werden kann, wird das gereinigte Glas der Wiederverwendung zugeführt.

Allerdings war die Herstellung des Mischkapsel-Mischraumkörpers aus Glas schon frühzeitig in Erwägung gezogen worden, wie die DE-OS 19 04 963 zeigt. Daraus wird aber auch erkennbar, daß ein gläserner Mischraumkörper ein anderes Problem mit sich bringt, nämlich das seines Öffnens nach erfolgter Amalgambildung: Dort wurde vorgeschlagen, nahe dem kalottenförmigen Ende des im wesentlichen zylindrischen, Reagenzglas-ähnlichen Mischraumkörpers eine ringförmige Einkerbung vorzusehen, entlang derer das besagte Ende des Mischraumkörpers abgebrochen werden kann.

Praktikabel ist eine solche Anordnung schon deshalb nicht, weil ein sicheres Aufbringen der Brechkraft nicht möglich ist. Vor allem aber besteht die erhebliche Gefahr, daß beim Abbrechen des Mischraumkörper-Endes störende Glassplitter entstehen (ganz davon abgesehen, daß der von der DE-OS 19 04 963 vorgesehene Kunststoffpropfen wiederum die oben beschriebene Trennung des Quecksilbers vom Kapselmaterial unmöglich macht).

Die Ausbildung des einen Mischraumkörper-Endes nach Art einer Glasampulle für pharmazeutische Flüssigkeiten, nämlich mit stark verringertem Durchmesser unter Bildung einer relativ engen Einschnürung am Ansatz des im Durchmesser verringerten Abschnitts löst das Problem nicht, weil das sich bildende Amalgam in jenem Endabschnitt verringerten Durchmessers verklemmt.

Der Erfindung liegt daher die Aufgabe zugrunde, eine Mischkapsel anzugeben, deren Mischraumkörper der besseren Entsorgbarkeit wegen aus Glas besteht, die aber nach dem Mischvorgang ohne Inkaufnahme schwerwiegender Probleme so geöffnet werden kann, daß das fertige Amalgam unschwer zu entnehmen ist.

Diese Aufgabe wird nach einem ersten Aspekt der Erfindung dadurch gelöst, daß der Mischraumkörper mit einer in Längsrichtung mittigen, umlaufenden, unverdickten Einschnürung versehen ist. Die Einschnürung des gläsernen Mischraumkörpers hat eine doppelte Funktion: Während des Mischvorganges bildet sie nach beiden angrenzenden Seiten (Hälften) des Mischraumkörpers hin - innenseitige - Ablenkflächen, welche eine rasche und innige Durchmischung der Mischungsbestandteile begünstigen. Nach Abschluß des Mischvorganges kann der Mischraumkörper im Bereich der Einschnürung auseinandergebrochen werden; dabei bildet die Einschnürung gewissermaßen eine natürliche Kerbe, und das Aufbringen der Bruchkraft auf den Mischraumkörper bereitet wegen der mittigen Anordnung keine Schwierigkeit. Einer größeren Wanddicke im Bereich der Einschnürung aufgrund der Durchmesserverringerung kann bei der Herstellung des Mischraumkörpers problemlos begegnet werden; falls erwünscht, kann die Wanddicke am Grund der Einschnürung sogar verringert werden.

Vorzugsweise sind die Enden des Mischraumkörpers gerundet, so daß dieser in Längsrichtung gewissermaßen doppelkeulenförmig ausgebildet ist.

Von Vorteil kann es ferner sein, den gläsernen Mischraumkörper mit einer schützenden Ummantelung zu umgeben, die aber nach dem Mischvorgang oder spätestens nach der Amalgam-Entnahme vom Glaskörper abgezogen wird, so daß einerseits der kontaminierte Mischraumkörper, andererseits der nicht-kontaminierte Kunststoff problemlos entsorgt oder letzterer sogar wiederverwendet werden kann.

Die schützende Ummantelung kann auch als Bestandteil der Mischergabel eines Kapselmischgerätes ausgebildet sein, also mit der Mischergabel fest oder abnehmbar verbunden sein. In diesem Fall muß die Ummantelung nicht allseitig geschlossen sein. Es genügt, wenn sichergestellt ist, daß die Glaskapsel unter keinen Umständen während des Mischvorgangs aus der Mischergabel heraustreten, oder durch die hohe Belastung zwischen den gespannten Enden der Mischergabel zerdrückt werden kann.

Das Öffnen des Mischraumkörpers kann auch durch mechanisches Anritzen oder Ansägen entlang einer umlaufenden Linie geschehen, welche in einer senkrecht zur Rotationsachse stehenden Ebene liegt. Die damit bewirkte Schwächung macht das anschließende Aufbrechen leicht und praktisch splitterfrei möglich. Es ist jedoch auch ein vollständiges mechanisches Auftrennen möglich. In solchen Fällen braucht der Mischraumkörper nicht notwendigerweise eine Einschnürung zu besitzen.

Nach einem weiteren Aspekt der Erfindung wird die oben angegebene Aufgabe dadurch gelöst, daß der gläserne Mischraumkörper aus zwei Teilen besteht und die beiden Teile entlang ihrer - insbesondere mittig - senkrecht zur Rotationsachse verlaufenden Teilungsfuge miteinander verklebt sind. Die Mittel zur stirnseitigen Verklebung einseitig offener Glashohlkörper sind bekannt; die dabei eingesetzten Klebstoffe können in so dünner Schicht aufgetragen werden, daß sie die Entsorgung des kontaminierten Glases nicht stören. Die Verbindung kann so beschaffen sein, daß sie nach dem Anmischvorgang nicht sofort geöffnet werden kann, sondern zusätzlich geschwächt werden muß. Beispielsweise können Klebstoffe die Eigenschaft haben, unter Bestrahlung mit Wärme und/oder Licht ihre - den Mischvorgang ohne weiteres überstehende - Klebkraft so weitgehend zu verlieren, daß sich nach dem Mischvorgang der Mischraumkörper aufgrund entsprechender Behandlung ohne weiteres in seine beiden Teile zerlegen läßt. Dabei kann z.B. eine lichtundurchlässige Ummantelung die Verbindung bis nach dem Mischvorgang erhalten, ihre Entfernung nach der Amalgambildung aber die Verbindung durch einen lichtempfindlichen Klebstoff entscheidend schwächen.

Die Verbindung an der Teilungsfuge kann auch mit Hilfe von Glasionomerzementen erfolgen. Diese weisen nämlich als besonderen Vorteil eine hohe Klebkraft bei gleichzeitiger geringer Biegefestigkeit auf. Damit ist sichergestellt, daß der gläserne Mischraumkörper an der Stelle der Zusammenfügung praktisch splitterfrei in die zwei Halbschalen zerbricht. Auch andere Werkstoffe, die eine sichere Verbindung der Glashalbschalen bewirken, sich jedoch gegenüber Biegekräften als wenig resistent erweisen, sind zur Zusammenfügung geeignet.

Eine Weiterbildung dieser Erfindungslösung - die wiederum nicht auf eingeschnürte Mischraumkörper beschränkt ist, sondern gerade auch bei zylindrischen Mischraumkörpern aus Glas angewendet werden kann - besteht darin, daß in der Teilungsfuge ein metallischer Ring angeordnet ist.

Dieser kann beispielsweise durch Aufdampfen einer Metallschicht auf die die Fuge bildende Stirnfläche mindestens eines der beiden Teile gebildet werden; es kann aber auch bei der Verklebung ein separater Metallring eingelegt werden. Die die Klebkraft herabsetzende Erwärmung des Klebstoffes kann dann durch elektrische Induktion im Metallring - und damit lokal eng begrenzt - erzeugt werden.

Eine Variation dieses Erfindungsaspekts - wiederum nicht auf eingeschnürte Mischraumkörper beschränkt - stellt die gummielastische Zusammenfügung der beiden Teile des Mischraumkörpers an der Teilungsfuge dar. Dabei ist der Zusammenhalt der beiden Glasteile so zu gestalten (mit oder ohne Ummantelung), daß während des Anmischvorgangs ein Auseinanderfallen der Glasteile nicht möglich ist, nach dem Anmischen aber eine leichte manuelle Trennung möglich ist. Dies gelingt beispielsweise durch eine ringförmige Raupe aus einem an Glas gut haftenden, aber rückstandsfrei abziehbaren gummiartigen Werkstoff, die die Trennfuge außen überdeckt; im Falle einer Einschnürung kann sie in diese eingelegt sein.

Aus der DE-PS 28 58 334 ist das Verkleben einer aus mehreren Teilen, namentlich Hauptteil und Deckel bestehenden Mischkapsel an sich bekannt, wobei die Klebnaht eine Sollbruchstelle zum Öffnen der Kapsel nach dem Mischvorgang bilden soll. Es handelt sich dabei aber nicht um eine aus Glas bestehende Mischkapsel, so daß die vorliegend angesprochenen Probleme dort nicht zur Diskussion standen und auch nicht gelöst wurden.

Die Zeichnungen veranschaulichen alle Aspekte der Erfindung an Ausführungsbeispielen. Darin zeigt jeweils im Längsmittelschnitt :

Fig. 1     eine nur aus dem gläsernen Mischraumkörper bestehende (gefüllte) Mischkapsel;

Fig. 2     eine gleichartige (ungefüllte) Mischkapsel mit stärkerer Einschnürung;

Fig. 3     eine wiederum gleichartige (ungefüllte) doppelkeulenförmig ausgebildete Mischkapsel;

Fig. 4     eine mit einem Mischraumkörper gemäß Fig. 1 versehene, von einer Kunststoffumhüllung umgebene Mischkapsel;

Fig. 5     eine nur aus dem gläsernen Mischraumkörper bestehende Mischkapsel gemäß dem zweiten Aspekt der Erfindung in Zylinderform;

Fig. 6     das Detail A in Fig. 5 in vergrößertem Maßstab;

Fig. 7     eine der Fig. 6 entsprechende Darstellung einer abgewandelten Ausführungsform; und

Fig. 8     eine ebenfalls der Fig. 6 entsprechende Darstellung einer weiter abgewandelten Ausführungsform;

Fig. 9 eine den Fig. 6 - 8 entsprechende Darstellung einer gummielastischen Verbindung der Mischraumkörper-Hälften; und

Fig.10 eine Abwandlung zu Fig. 9.

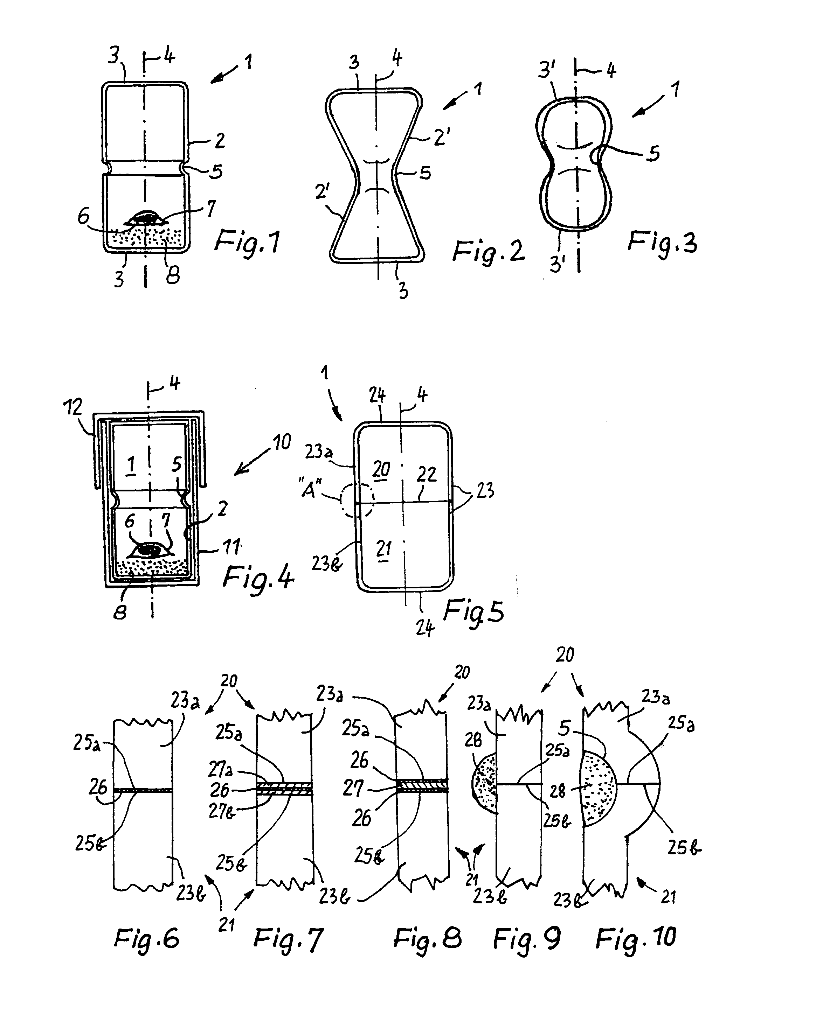

Der in Fig. 1 dargestellte, im wesentlichen zylindrische Mischraumkörper 1 aus Glas besteht aus einem im Querschnitt kreisförmigen Mantel 2 und entsprechend kreisförmigen Stirnseiten 3. Der Mantel 2 besteht mit den Stirnseiten 3 aus einem Stück. Die Rotationsachse des zylindrischen Mantels 2 ist mit 4 bezeichnet.

Etwa in der Mitte der Längserstreckung des Mantels 2 ist in diesem eine umlaufende Einschnürung 5 vorgesehen. Die Wanddicke im Grund der nuten- oder sickenförmigen Einschnürung 5 ist nicht größer, sondern eher geringer als die Wanddicke des Zylindermantels 2 im übrigen. Auf diese Weise stellt die Einschnürung 5 eine Sollbruchstelle dar, wenn der Mischraumkörper 1 nach Beendigung des Mischvorganges geöffnet werden soll.

Andererseits begünstigt die in den Innenraum des Mischraumkörpers 1 ragende Einschnürung 5 beim Mischvorgang das Vermischen der Mischungsbestandteile, die vor dem Verschließen des Mischraumkörpers 1 in diesen eingebracht wurden und aus einem mit Quecksilber 6 gefüllten Folienbeutel 7 sowie den pulverförmig vorliegenden übrigen Bestandteilen 8 bestehen. Denn bei dem das Öffnen des Folienbeutels 7 und das Mischen aller Bestandteile herbeiführenden Vibrationsvorgang, bei dem der Mischraumkörper 1 in Richtung der Achse 4 bewegt wird, lenkt die Einschnürung 5 die Mischungsbestandteile ab und sorgt durch die damit bewirkte Umwälzung für ein rasches und intensives Vermischen.

Fig. 2 verdeutlicht, daß die Einschnürung 5 auch wesentlich stärker ausgebildet sein kann, derart, daß der Mantelabschnitt 2' des Mischraumkörpers 1 keine Zylinderform mehr hat.

Fig. 3 zeigt eine weitere Abwandlung dahingehend, daß statt der im wesentlichen ebenen Stirnseiten 3 kalottenförmige Stirnseiten 3' vorgesehen sind, so daß sich - im Längsschnitt - eine gewissermaßen doppelkeulenförmige Gestalt des Mischraumkörpers 1 ergibt. Neben einer weiteren Intensivierung des Mischvorganges hat diese Formgebung den Vorteil, daß sich kein Amalgam in den ringförmigen Ecken zwischen den Stirnseiten 3 und den Mantelabschnitten 2 bzw. 2' festsetzen kann.

Fig. 4 veranschaulicht, daß der gläserne Mischraumkörper 1 auch in einer schützenden Ummantelung 10 - namentlich aus Kunststoff - untergebracht werden kann, bis der Mischvorgang beendet ist. Im Beispiel der Fig. 4 ist in die Ummantelung 10 ein Mischraumkörper 1 gemäß Fig. 2 eingesetzt worden; möglich ist jedoch auch die Verwendung derselben Ummantelung für einen Mischraumkörper gemäß Fig. 2 oder einer im wesentlichen ähnlichen Ummantelung für einen Mischraumkörper gemäß Fig. 3. Die Ummantelung 10 besteht im Beispiel aus einem Hauptteil 11 und einem diesen über einen Teil seiner Längserstreckung übergreifenden Deckel 12. Durch geeignete - allgemein bekannte - Maßnahmen kann sichergestellt werden, daß sich der Mischraumkörper im Hauptteil 11 der Ummantelung 10 nicht bewegen kann, nach Abschluß des Mischvorganges aber unschwer aus diesem herausnehmbar ist.

Alternativ kann die Ummantelung auch aus einem Folienüberzug des Mischraumkörpers bestehen, die infolge einer gewissen Klebrigkeit am Glas des Mischraumkörpers 1 haftet, nach Abschluß des Mischvorganges aber ohne weiteres vom Mischraumkörper 1 abziehbar ist.

Fig. 5 zeigt eine andere Ausführungsform der Mischkapsel, die in der Darstellung wiederum nur aus einem Mischraumkörper 1 besteht, aber auch mit einer Ummantelung versehen werden kann. Im Unterschied zu den bisher beschriebenen Ausführungsbeispielen hat die in Fig. 5 dargestellte Mischraumkapsel keine Einschnürung, sondern besteht aus zwei Teilen 20 und 21, die einander im wesentlichen gleich sind und entlang der Teilungsfuge 22 stirnseitig miteinander verklebt sind. Jedes Teil 20, 21 besteht also aus einem zylindrischen Längsabschnitt 23a, 23b des Zylindermantels 23 und je einer der Stirnseiten 24.

Die Fig. 6 bis 8 zeigen unterschiedliche Ausführungsformen der Teilungsfuge 22. Gemäß Fig. 6 sind die Stirnflächen 25a, 25b der beiden Teile 20, 21 des Mischraumkörpers 1 unmittelbar durch eine Klebschicht 26 verbunden. Beim Ausführungsbeispiel der Fig. 7 sind auf jene Stirnflächen 25a, 25b Metallschichten 27a, 27b durch Aufdampfen befestigt, und erst diese sind durch die Klebstoffschicht 26 miteinander verbunden. Beim Ausführungsbeispiel der Fig. 8 ist zwischen zwei unmittelbar auf die Stirnflächen 25a, 25b aufgebrachten Klebstoffschichten 26 ein Metallring 27 angeordnet und verklebt.

Während die Verklebung gemäß Fig. 6 beispielsweise durch Wärme- oder Lichtbestrahlung (weitgehend) aufgelöst werden kann, geschieht dies bei den Ausführungsbeispielen gemäß den Fig. 7 und 8 durch Induktionserwärmung der Metallschichten 27.

In den Fig. 9 und 10 ist eine Variation der Verbindung der beiden Teile 20, 21 eines aus zwei Hälften bestehenden Mischraumkörpers dargestellt. Die Verbindung besteht aus einer Raupe 28, welche um den Mischraumkörper umläuft und die Teilungsfuge zwischen den Stirnflächen 25a, 25b überdeckt. Das gummielastische Material haftet so fest am Glas, daß sich auch während des Mischvorganges die beiden Teile 20, 21 nicht voneinander lösen. Andererseits läßt sich die Raupe 28 nach dem Mischen leicht abziehen. Während in Fig.9 ein Mischraumkörper ohne Einschnürung dargestellt ist und die Raupe 28 daher die Außenseite des Mischraumkörpers überragt, hat der in Fig. 10 dargestellte Mischraumkörper eine Einschnürung 5, in der die Teilungsfuge (mit den Stirnflächen 25a, 25b) angeordnet ist, so daß die Raupe 28 im wesentlichen innerhalb der Einschnürung 5 angeordnet sein kann.

**Patentansprüche**

1. Mischkapsel für Dental-Amalgam mit einem länglichen, zur Längsachse rotationssymmetrischen Mischraumkörper (1) aus Glas, in dessen Mischraum einerseits Quecksilber (6) innerhalb eines Folienbehälters (7) sowie andererseits die übrigen Mischungsbestandteile (8) untergebracht sind, dadurch gekennzeichnet, daß der Mischraumkörper (1) mit einer in Längsrichtung mittigen, umlaufenden, unverdickten Einschnürung (5) versehen ist.

2. Mischkapsel nach Anspruch 1, dadurch gekennzeichnet, daß der Mischraumkörper (1) in Längsrichtung etwa doppelkeulenförmig ausgebildet ist (Fig. 3).

3. Mischkapsel nach Anspruch 1 oder 2, dadurch gekennzeichnet, daß der Mischraumkörper (1) lösbar von einer schützenden Ummantelung (10) insbesondere aus Kunststoff umgeben ist.

4. Mischkapsel nach Anspruch 3, dadurch gekennzeichnet, daß die Ummantelung ein fester oder abnehmbarer Bestandteil der Mischergabel ist, die die Kapsel während des Mischvorganges umfaßt.

5. Mischkapsel nach Anspruch 4, dadurch gekennzeichnet, daß der Kunststoff etwas klebrig, aber von Glas unschwer abziehbar ist.

6. Mischkapsel nach Anspruch 3 oder 4, dadurch gekennzeichnet, daß die Ummantelung (10) zweiteilig aus einem Hauptteil (11) und einem Deckel (12) gebildet und der Mischraumkörper (1) im Hauptteil (11) relativ zu diesem unbewegbar, aus dem geöffneten Hauptteil jedoch herausnehmbar gehalten ist.

7. Verfahren zum Öffnen einer Mischkapsel für Dental-Amalgam mit einem länglichen, zur Längsachse rotationssymmetrischen Mischraumkörper (1) aus Glas, insbesondere nach Anspruch 1, nachdem aus den im Mischraum untergebrachten Mischungsbestandteilen (einschließlich Quecksilber) durch eine Vibrationsbehandlung der Mischkapsel Amalgam gebildet wurde, dadurch gekennzeichnet, daß die Mischkapsel durch einen senkrecht zur Rotationsachse (4) umlaufenden Schnitt geschwächt oder in zwei Teile aufgetrennt wird.

8. Mischkapsel für Dental-Amalgam mit einem länglichen, zur Längsachse rotationssymmetrischen Mischraumkörper (1) aus Glas, in dessen Mischraum einerseits Quecksilber (6) innerhalb eines Folienbehälters (7) sowie andererseits die übrigen Mischungsbestandteile (8) untergebracht sind, dadurch gekennzeichnet, daß der Mischraumkörper (1) aus zwei Teilen (20, 21) besteht und die beiden Teile entlang ihrer - insbesondere mittig - senkrecht zur Rotationsachse (4) verlaufenden Teilungsfuge (22) miteinander verbunden, insbesondere verklebt sind (Klebschicht 22; gummielastische Raupe 28).

9. Mischkapsel nach Anspruch 8, dadurch gekennzeichnet, daß die Verbindung mechanisch, thermisch oder mittels Licht schwächbar ist.

10. Mischkapsel nach Anspruch 9, dadurch gekennzeichnet, daß in der Teilungsfuge (22) ein metallischer Ring (27) angeordnet ist.

Fig.1  Fig.2  Fig.3

Fig.4  Fig.5

Fig.6  Fig.7  Fig.8  Fig.9  Fig.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 322 114 (MÜHLBAUER)<br>– – – | 1,7 | A 61 C 5/06 |
| Y | DE-A-3 322 114 (* Seite 5, Zeile 10 - Zeile 22; Abbildungen *)<br>– – – | 8,9 | |
| A | FR-A-2 642 299 (BERLAND)<br>* Seite 4, Zeile 20 - Zeile 23 *** Abbildungen 1,4 **<br>– – – | 1,7 | |
| A | DE-C-513 954 (BÜRGER)<br>* Seite 2, Zeile 19 - Zeile 24 *** Abbildungen 1,4,8 **<br>– – – | 1,3,7 | |
| A,D | FR-A-2 430 893 (MÜHLBAUER)<br>* Seite 3, Zeile 5 - Zeile 9; Ansprüche 1-4 *** Abbildung **<br>– – – | 1,7 | |
| A,D | FR-A-2 032 653 (MÖSCH)<br>* Seite 3, Zeile 4 - Zeile 13 *** Abbildung 1 **<br>– – – | 1,7 | |
| A | FR-A-680 757 (DEUTSCHE GOLD UND SILBER-SCHEIDEANSTALT)<br>– – – | 1,7 | |
| Y | FR-A-680 757 (* Seite 1, Zeile 28 - Zeile 38 * )<br>* Seite 2, Zeile 32 - Zeile 80; Abbildungen **<br>– – – – – | 8,9 | RECHERCHIERTE SACHGEBIETE (Int. Cl.5)<br><br>A 61 C |

Der vorliegende Recherchenbericht wurde für alle Patentansprüche erstellt

| Recherchenort | Abschlußdatum der Recherche | Prüfer |
|---|---|---|
| Den Haag | 12 Dezember 91 | GODOT T.G.L. |